# EUROPEAN PATENT APPLICATION

(11) **EP 3 962 127 A1**
(43) Date of publication of application: **02.03.2022**
(21) Application number: 20192445.3
(22) Date of filing: 24.08.2020
(51) Int. Cl.: H04W 4/44, H04W 4/46

(54) **COMPUTER IMPLEMENTED METHOD FOR EVALUATING TRAFFIC INCIDENTS USING A PLURALITY OF VEHICLES**

(71) Applicant: Aptiv Technologies Limited, St. Michael (BB)
(72) Inventor: Yeole, Paresh, 42119 Wuppertal (DE)
(74) Representative: Manitz Finsterwald Patent- und Rechtsanwaltspartnerschaft mbB

(57) **Abstract**

Computer implemented method for evaluating traffic incidents using a plurality of vehicles, wherein each vehicle comprises a short-range communication means for short-range communication, a detection means configured to detect a traffic incident in a surrounding area of the vehicle, an evaluation means configured to evaluate the detected traffic incident and classifying a result of the evaluation of the detected traffic incident and a storage list configured to store the result of the classification as well as possible further classification results relating to said traffic incident obtained from other vehicles and/or stationary detection means. System to carry out said computer implemented method and non-transitory computer readable medium comprising instructions for carrying out said computer implemented method.

## Description

### FIELD

The present disclosure relates to a computer implemented method for evaluating traffic incidents using a plurality of vehicles. The present disclosure is also directed at a system to carry out said computer implemented method and to a non-transitory computer readable medium comprising instructions for carrying out said computer implemented method.

### BACKGROUND

Modern vehicles are equipped with traveling guidance systems or navigation systems which allow for choosing an optimum routing from multiple available routes stored for instance in a memory of the traveling guidance system to reach a destination in a traveling time as short as possible. In order to find an optimum routing during traveling, the traveling guidance system typically provides real-time guidance. The real-time guidance is based on information on an actual traffic situation on each of the available routes. Such kind of the traffic situation may be either a traffic volume, i.e. the density of other traffic participants on the route, or a traffic incident, such as an obstacle like an accident, a construction site on the route or a harmful person. However, each traffic situation or traffic incident will lead to an undesired delay in traveling time. Depending on the information on the actual traffic situation along each possible route, the traveling guidance system performs a ranking of each possible route and ultimately provides a suggestion for an optimum route.

In order to obtain the information on the actual traffic situation, the traveling guidance systems may communicate with each other using long-range global communication and/or short-range local communication. Long-range global communication may be performed via a cellular network using for example the LTE (long term evolution) standard, whereas short-range local communication may be performed by using the IEEE-802.11-standard like WiFi or the bluetooth standard.

Long-range global communication has the advantage of high network stability along with a broad transmission range. However, long-range global communication requires a costly infrastructure. In contrast to that, short-range global communication is much more cost-efficient, but suffers from problems like broadcast storm and often network disconnections. Hence, there is a need of finding a trade-off between using long-range global communication and short-range global communication thereby employing the advantages of both communication types for optimum time-sensitive and cost-efficient transmission of traffic data.

Furthermore, compared to rather secure long-range global communication, short-range local communication is prone to manipulation, for example by a dishonest report on a traffic incident by at least one vehicle. Propagation of such dishonest report to other vehicles will tremendously affect the other vehicles upon their decision which route to choose. However, erroneous information on a traffic incident can also be generated by a defective detection means configured to detect a traffic incident in a surrounding area of a vehicle or by a false evaluation of an evaluation means configured to evaluate the detected traffic incident. Dishonest reporting of a traffic incident as well as providing erroneous information on a traffic incident will lead to contradictory information about a traffic incident within a given area, in particular in an area in the vicinity of the traffic incident. Therefore, there is a need to find the correct information about the traffic incident, in particular before broadcasting the information to other vehicles.

Ultimately, there is a need to broadcast information on a traffic incident in a cost-efficient and reliable manner to other vehicles.

Mentioned demands are satisfied by the method comprising the features of claim 1.

### SUMMARY

The present disclosure provides a computer implemented method, a computer system and a non-transitory computer readable medium according to the independent claims. Embodiments are given in the subclaims, the description and the drawings.

The computer implemented method for evaluating traffic incidents using a plurality of vehicles is configured to be carried out in vehicles, wherein each vehicle comprises a short-range communication means, a detection means, an evaluation means and a storage list. The short-range communication means is configured for short-range communication. The detection means is configured to detect a traffic incident in a surrounding area of the vehicle. The detection means may be an optical sensor like LIDAR (light or laser detection and ranging) or a camera. The camera may be linked to an image processing means configured to detect a traffic incident on an image taken by the camera. The detection means may also be an acoustic sensor or RADAR (radio detection and ranging). The evaluation means is configured to evaluate the detected traffic incident and to classify a result of the evaluation of the detected traffic incident. The classification result may be for example at least one of a severe accident, a light accident, a road construction and a road with no traffic incident. The storage list is configured to store the result of the classification and possible further classification results relating to said traffic incident obtained from other vehicles and/or stationary detection means. In this context, a stationary detection means may be for example a surveillance camera configured to monitor the traffic. The stationary detection means may also be any other immobile device for detecting traffic, for example an induction loop embedded in the pathway.

The method starts with defining a communication range in which at least two vehicles are grouped to form a cluster of vehicles. In the next step, a chain like dynamic mobile ad hoc communication network is set-up between the at least two vehicles within the cluster for a predetermined clustering time using the short-range communication means. In this chain like communication network each vehicle is a physical node. Subsequently, a cluster head vehicle is designated from the vehicles of the chain like communication network, wherein at least the cluster head vehicle further comprises a long-range communication means for long-range communication. It is to be understood that at least one other vehicle of the chain like communication network may also comprise a long-range communication means. Preferably, each vehicle of the chain like communication network is equipped with a long-range communication means. After performing the step of designating a cluster head vehicle, all physical nodes of the chain like communication network are identified, thereby identifying a number of vehicles as members of the cluster. Next, a virtual ring like network comprising virtual nodes is created on the basis of all identified physical nodes. In the virtual ring like network the virtual nodes are connected to each other in a closed chain via communication pathways. In this context, the virtual nodes are images of the physical nodes of the chain like communication network. In a subsequent step, short cut communication pathways are created between non-neighboring virtual nodes. The communication pathways and the short cut communication pathways are used to identify all virtual nodes connected to a selected virtual node. The identified virtual nodes are then stored in a preliminary communication member list associated with the selected virtual node. The step of identifying all virtual nodes is repeated for each remaining virtual node of the virtual ring like network until every communication member is identified for all virtual nodes of the ring like network. After the step of identifying all virtual nodes for each virtual node is completed, the preliminary communication member lists of each virtual node are overlayed or merged together to form a communication member list which is then transferred to the corresponding physical node of the chain like communication network, with the communication member list representing communication members within the cluster of vehicles. The communication member list allows for performing a random walk between uniformly at random chosen physical nodes on the basis of the communication member list. In other words, once the members of the chain like communication network are known from the respective communication member list, a communication path may be chosen uniformly at random to reach a member enlisted in the communication member list. During the random walk, classification results of uniformly at random chosen physical nodes may be obtained and may be stored in the storage list for comparison. The classification results of the uniformly at random chosen physical nodes are compared. The steps of performing a random walk and comparing the classification results is repeated until a threshold value for a consensus between all classification results is reached. After the threshold value for the consensus between the classification results of all physical nodes or vehicles is reached, the cluster head vehicle transmits the consensus on the classification results to at least one vehicle and/or at least one stationary entity outside the chain like communication network via the long term communication means of the cluster head vehicle. The stationary entity may be for example a stationary transmission antenna or a computing device of a provider of a traveling guidance system.

The method is based on the idea that before information on a traffic incident is disseminated from a cluster of multiple vehicles towards other vehicles outside the cluster, the information is validated on the basis of classification results of the traffic incident obtained from all of the vehicles of the cluster. By using a short-range communication network for the validation of the information inside the cluster and long-range communication network for broadcasting of the validated information to the outside of the cluster, the advantage of low-cost short-range communication is combined with the stability of long-range communication, hence providing a cost-efficient and reliable method for evaluating traffic incidents.

In this disclosure, a dynamic network is a network that has at least one dynamic or mobile node. The clustering time is a time when all vehicles, i.e. members of the cluster remain within the cluster. The cluster is considered to be stable if none of the members of the cluster leaves the cluster within the cluster time.

According to an embodiment, the short-range communication means and the long-range communication means may each comprise an antenna for transmitting and receiving signals. According to another embodiment, the short-range communication means and the long-range communication means may share a common antenna for transmitting and receiving signals.

According to an embodiment, the vehicles may be grouped according to at least one of a common coordinate field, a common traveling direction, a common speed and a detectability range of the detection means. In particular the detection means of the cluster head vehicle may be used for grouping vehicles to the chain like ad hoc communication network. If the vehicles are for example cars, trucks or motorcycles and the vehicles are grouped on the basis of common speed, the difference in the speed between at least two vehicles may be 20 km/h, preferably 10 km/h and more preferably 5 km/h. It is to be understood, that the speed difference may be different, when the vehicles are air borne vehicles such as planes, drones or satellites. Furthermore, vehicles not traveling the same direction, i.e. for example vehicles traveling on opposite traffic lanes may also be grouped to form a cluster. Furthermore, vehicles encountering the traffic lane from a side lane may also be considered when grouping vehicles to a cluster. It may be also envisaged that vehicles may be grouped by reaching a predetermined number within a predetermined range which preferably may be the short-range communication range of a vehicle that will be designated as the cluster head vehicle.

According to an embodiment, the step of identifying all physical nodes may comprise creating at least one virtual node from the physical node of the chain like communication network, wherein each virtual node contains an information on at least each preceding virtual node for at least one virtual node subsequent to a virtual node corresponding to the cluster head vehicle, in particular with the succeeding virtual node being a direct neighbor of its preceding virtual node.

According to an embodiment, the chain like mobile ad hoc communication network is not only linear but also branched, allowing for more complex cluster structures. If the chain like mobile ad hoc communication network is branched, than the chain like mobile communication network has a tree like structure.

According to an embodiment, in order to identify all physical nodes in the step of identifying all physical nodes, a depth-first traversal analysis may be performed. For this purpose, the depth-first traversal analysis may start from the physical node that corresponds to the cluster head vehicle and may progress towards a distal end physical node and after reaching the distal end physical node may progress in traverse direction back to the starting physical node. This procedure may be applied to each branch of the chain like communication network.

According to an embodiment, the step of identifying all physical nodes may comprise creating a number of virtual nodes from each physical node from which a branch of communication pathways emerges, with the number of virtual nodes corresponding to the number of branches emerging from the corresponding physical node plus one. Such kind of additional virtual node creation generates enough virtual nodes for the formation of a virtual ring like network.

However, less virtual nodes are created for distal end physical nodes, because distal end physical nodes are not branched. Therefore, according to an embodiment, the communication member list of a distal end physical node may contain a number of communication members being less than a total number of all communication members of the cluster. In order to compensate for the lower number of communication members, the difference in the number of communication members may be compensated by adding the same physical node as a communication member to stack up the communication member list to the total number of all communication members. According to another embodiment, instead of stacking up the communication member list by adding the same physical node, the communication member list may be stacked-up by at least one preceding physical node, at least one physical node preceding the preceding virtual node and so on, until the communication member list is populated by total number of communication members. Furthermore, for the same effect, the communication member list could also be filled up by the same physical node and preceding physical nodes.

The compensation allows for a balanced evaluation during the comparison of the classification results obtained by the evaluation means of a vehicle being a distal end physical node of the chain like communication network.

According to an embodiment, pointer jumping may be implemented to create the short cut communication pathway between the virtual nodes. When pointer jumping is implemented, short cut communication pathways are created between non-directly neighboring virtual nodes by passing over at least one directly neighboring virtual node, thereby creating an overlay network comprising direct communication pathways as well as short cut communication pathways.

According to an embodiment, the physical nodes may be connected in an expander graph like manner after transferring of the communication member list to each physical node. Such kind of connection of the physical nodes allows for an easy and direct communication between each vehicle of the cluster.

According to an embodiment, a secure hash algorithm, such as SHA-256, may be implemented for the initial selection of the uniformly at random chosen physical nodes from the communication member list as well as a length of the random walk.

According to an embodiment, the threshold value for the consensus may be obtained iteratively by the following algorithm:
classification results between neighboring physical nodes of the chain like communication network are compared by using a fetcher node asking for the classification result of an exhibitor node neighboring the fetcher node:
if the classification result of the exhibitor node differs from the classification result of the fetcher node, the fetcher node enters into an undecided state,
if the fetcher node is in an undecided state and obtains the classification result from an exhibitor node, not being in an undecided state, the fetcher node incurs the classification result of the exhibitor node,
if the fetcher node and the exhibitor node share the same classification result or if the exhibitor node is in an undecided state, the fetcher node maintains its classification result.

According to an embodiment, a time for reaching the threshold value for the consensus between all classification results is shorter than the predetermined clustering time. If the time for reaching the threshold value for the consensus is shorter than the predetermined clustering time, consensus will be certainly reached.

However, according to an embodiment, the threshold value for the consensus may be 60 % of full consensus, preferably 80 % of full consensus and ideally 100 % of full consensus. If consensus is reached at lower threshold values, than the time required to reach the consensus is shorter, which allows for a faster evaluation of the classification results and ultimately expedites the method, however, at the cost of accuracy.

According to an embodiment, in the step of a random walk between uniformly at random chosen physical nodes, short-range communication means may be implemented for communication between directly neighboring physical nodes. Alternatively, the short-range communication means may be implemented for the communication between non-directly neighboring physical nodes by communicating via physical nodes intermediate the non-directly neighboring physical nodes, also known as hopping from one physical node via at least one intermediate physical node to a destination physical node. Additionally or alternatively, long-range communication means may be implemented for communication between directly neighboring physical nodes and/or non-directly neighboring nodes.

Using the long-range communication allows for the communication of the vehicles of the cluster to communicate with each other even if at least one vehicle of the cluster has left the short-range communication range of the other vehicles. By connecting the vehicles via the long-range communication means allows for a longer predetermined clustering time thus prolonging the time for reaching the threshold value for the consensus. If the time for reaching the threshold value for the consensus is prolonged, a higher threshold value may be chosen, thereby increasing accuracy of the consensus.

It is to be understood, that the method of this disclosure may not only be used for the evaluation of detected traffic incidents such as accidents or construction sites but also for traffic incidents like a crowded pathway. Such kind of crowded pathway evaluation may be performed by counting the number of further traffic participants in the surrounding area of the vehicle.

In a further aspect, the present disclosure is directed at a system to carry out said computer implemented method.

In yet a further aspect, the present disclosure regards to a non-transitory computer readable medium comprising instructions for carrying out said computer implemented method.

In another aspect, the present disclosure is directed at a computer system, said computer system being configured to carry out several or all steps of the computer implemented method described herein.

The computer system may comprise a processing unit, at least one memory unit and at least one non-transitory data storage. The non-transitory data storage and/or the memory unit may comprise a computer program for instructing the computer to perform several or all steps or aspects of the computer implemented method described herein.

In another aspect, the present disclosure is directed at a non-transitory computer readable medium comprising instructions for carrying out several or all steps or aspects of the computer implemented method described herein. The computer readable medium may be configured as: an optical medium, such as a compact disc (CD) or a digital versatile disk (DVD); a magnetic medium, such as a hard disk drive (HDD); a solid state drive (SSD); a read only memory (ROM), such as a flash memory; or the like. Furthermore, the computer readable medium may be configured as a data storage that is accessible via a data connection, such as an internet connection. The computer readable medium may, for example, be an online data repository or a cloud storage.

The present disclosure is also directed at a computer program for instructing a computer to perform several or all steps or aspects of the computer implemented method described herein.

Although the idea of this disclosure is described in the context of ground based vehicles such as cars, trucks, motorcycles or the like, the method, system and non-transitory computer readable medium may also implemented in other vehicles such as ships, air-borne vehicles like air-planes, drones or spaceflight vehicles like satellites or space stations.

### DRAWINGS

Exemplary embodiments and functions of the present disclosure are described herein in conjunction with the following drawings, showing schematically:
- Fig. 1: a work flow of a computer implemented method for evaluating traffic incidents using a plurality of vehicles,
- Fig. 2: a set of vehicles being grouped to a cluster thereby forming a branched chain like communication network according to the method of Fig. 1,
- Fig. 3: a step of the method of Fig. 1, wherein all physical nodes of the cluster are identified,
- Fig. 4: a step of the method of Fig. 1, wherein a virtual ring like network is created,
- Fig. 5: a step of the method of Fig. 1, wherein communication pathways are created between virtual nodes of the virtual ring like network of Fig. 4, thereby identifying the virtual nodes of the ring like network, which are stored in a preliminary communication member list,
- Fig. 6: a step of the method of Fig. 1, wherein each preliminary communication member list has been merged to form a corresponding communication member list, which has been transferred to each vehicle of the cluster of vehicles of Fig 2 and wherein random walk between uniformly at random chosen vehicles of the cluster is performed to ultimately reach a threshold value for a consensus between classification results relating to a traffic incident, and
- Fig. 7: an exemplary vehicle of the set of grouped vehicles of Fig. 2.

### DETAILED DESCRIPTION

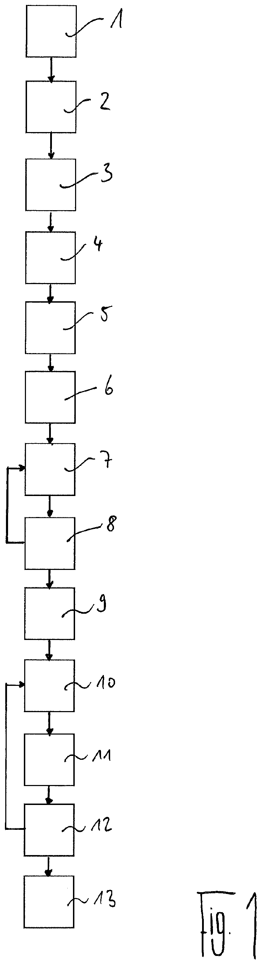

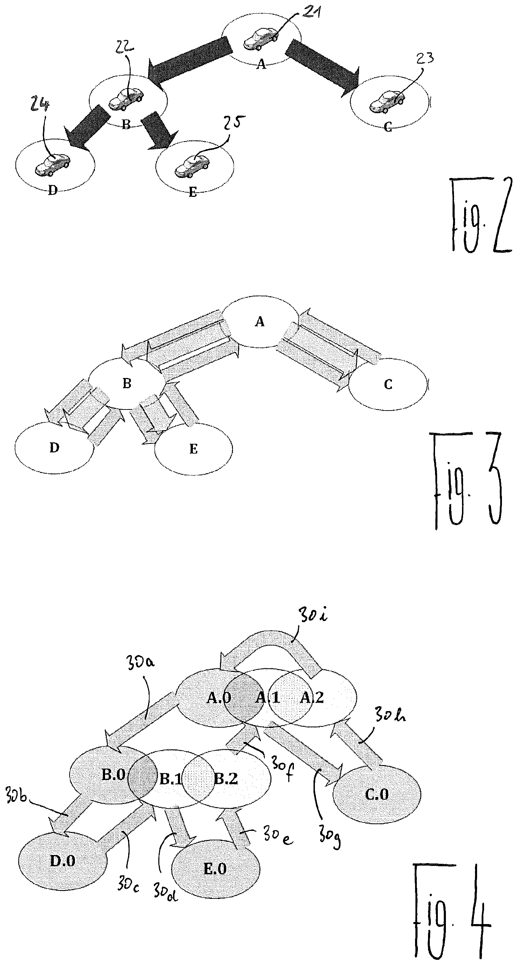

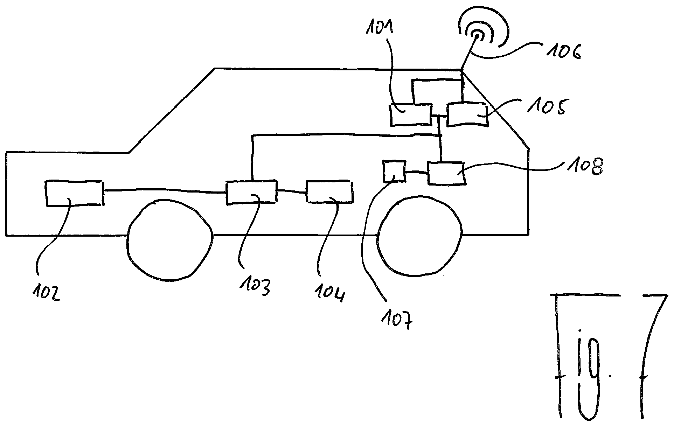

Fig. 1 depicts a flow chart of a computer implemented method for evaluating traffic incidents using a plurality of vehicles shown in Fig. 2. Figs. 2 to 6 show details of various steps of the method depicted in Fig. 1. Fig. 7 depicts an exemplary vehicle which is used for evaluating traffic incidents utilizing the method.

The method is used to evaluate a traffic incident such as traffic volume, i.e. for example the density of other traffic participants on the route, an accident, a construction site or a harmful person. The evaluated traffic incident can then be broadcasted to other vehicles to find an optimum traveling route with a minimum delay.

In order to evaluate the traffic incident, the method begins in step 1 with defining a communication range in which at least two vehicles are grouped to form a cluster of vehicles. As can be seen from Fig. 2, in this exemplary embodiment, five cars 21, 22, 23, 24 and 25 are grouped to form a cluster of five vehicles. The vehicles 21, 22, 23, 24, 25 may be grouped by at least one of a common coordinate field, a common traveling direction and a common speed.

Each vehicle 21, 22, 23, 24 and 25 comprises a short-range communication means 101, a detection means 102, an evaluation means 103 and a storage list 104 (Fig. 7).

The short-range communication means 101 is configured for short-range communication using for example a WiFi or Bluetooth standard. Furthermore, at least one of the vehicles 21, 22, 23, 24 or 25 may comprise a long-range communication means 105 configured for long-range communication using for example an LTE standard. The short-range communication means 101 and the long-range communication means are connected to an antenna 106 for transmitting and receiving signals.

Each detection means 102 is configured to detect a traffic incident in a surrounding area of the respective vehicle 21, 22, 23, 24 or 25. The detection means 102 may be an optical sensor like LIDAR (light or laser detection and ranging) or a camera. The camera may be linked to an image processing means (not shown) configured to detect a traffic incident on an image taken by the camera. The detection means 102 may also be an acoustic sensor or RADAR (radio detection and ranging).

The evaluation means 103 is connected to the detection means 102. Furthermore, the evaluation means 103 is configured to evaluate the detected traffic incident and to classify a result of the evaluation of the detected traffic incident. For example, the detected traffic incident may be evaluated as at least one of a crowded pathway, a severe accident, a light accident, a construction side and a pathway free of any hindrance.

The storage list 104 is connected to the evaluation means 103. The storage list 104 is configured to store the result of the classification and possible further classification results relating to said traffic incident obtained from other vehicles and/or stationary detection means. In this context, a stationary detection means may be for example a surveillance camera configured to monitor the traffic. The stationary detection means may also be any other immobile device for detecting traffic, for example an induction loop embedded in the pathway.

In step 2, a chain like dynamic mobile ad hoc communication network is set-up between the vehicles 21, 22, 23, 24 and 25 within the cluster for a predetermined clustering time using the short-range communication means 101. In this chain like communication network each vehicle 21, 22, 23, 24, 25 is a physical node A, B, C, D, E of the chain like communication network. As can be seen best from Fig. 2, the chain like communication network according to this exemplary embodiment is branched.

After the vehicles 21, 22, 23, 24 and 25 have been grouped and connected to the chain like dynamic ad hoc communication network, in the next step 3, a cluster head vehicle is designated from the vehicles 21, 22, 23, 24, 25 of the chain like communication network. In the present embodiment, the vehicle 21 is designated as the cluster head vehicle. In this context, at least the cluster head vehicle 21 comprises the long-range communication means 105. It is to be understood that at least one other vehicle 22, 23, 24 or 25 of the chain like communication network may also comprise a long-range communication means 105. Preferably, each vehicle 21, 22, 23, 24 and 25 of the chain like communication network is equipped with a long-range communication means 105. In this context, grouping of the vehicles 21, 22, 23 24 and 25 may be also based on a detectability range of the detection means 102, in particular based on the detectability of the detection means 102 of the cluster head vehicle 21.

After performing the step 3 of designating a cluster head vehicle 21, in step 4, all physical nodes A, B, C, D, E of the chain like communication network are identified, thereby identifying a number of vehicles 21, 22, 23, 24, 25 as members of the cluster (Fig. 3). In order to identify all physical nodes in step 4 of identifying all physical nodes, a depth-first traversal analysis may be performed. For this purpose, the depth-first traversal analysis starts from the physical node A that corresponds to the cluster head vehicle 21 and progresses towards each distal end physical node C, D, E. After reaching the distal end physical nodes C, D, E the depth-first analysis progresses in a traverse direction back to the starting physical node A.

During the step 4 of identifying all physical nodes A, B, C, D, E at least one virtual node A.0, A.1, A.2, B.0, B.1, B.2, C.0, D.0, E.0 is created from the physical nodes A, B, C, D, E of the chain like communication network (Fig. 4). Each virtual node A.0, A.1, A.2, B.0, B.1, B.2, C.0, D.0, E.0 contains an information on at least each preceding virtual node for at least one virtual node subsequent to a virtual node corresponding to the cluster head vehicle 21, in particular with the succeeding virtual node being a direct neighbor of its preceding virtual node. By means of example, the virtual node D.0 contains the information on the preceding virtual node B.0 being a virtual node that is subsequent to the virtual node A.0 corresponding to the physical node A which is related to the cluster head vehicle 21. Furthermore, the virtual node B.0 precedes the virtual node D.0, wherein the virtual nodes B.0 and D.0 are direct neighbors. The virtual node B.1 succeeds the virtual node B.0 and both virtual nodes B.1, B.0 are direct neighbors.

At step 4 of identifying all physical nodes A, B, C, D, E, each physical node A, B from which a branch emerges creates a number of virtual nodes A.0, A.1, A.2, B.0, B.1, B.2, with the number of virtual nodes A.0, A.1, A.2, B.0, B.1, B.2 corresponding to the number of branches emerging from the corresponding physical node A, B plus one (Fig. 4).

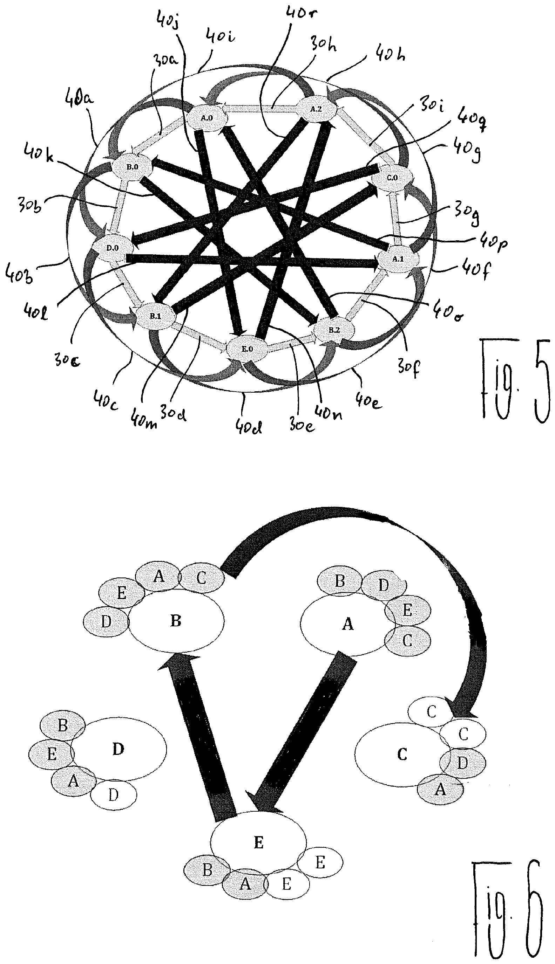

The virtual nodes A.0, A.1, A.2, B.0, B.1, B.2, C.0, D.0, E.0 are used in step 5 for the creation a virtual ring like network comprising virtual nodes A.0, A.1, A.2, B.0, B.1, B.2, C.0, D.0, E.0, wherein virtual nodes A.0, A.1, A.2, B.0, B.1, B.2, C.0, D.0, E.0 are connected to each other in a closed chain via communication pathways 30a to 30i (Fig. 4 and 5).

In a subsequent step 6, short cut communication pathways 40a to 40r are created between non-neighboring virtual nodes. For this purpose a pointer jumping algorithm may be implemented.

The communication pathways 30a to 30i and the short cut communication pathways 40a to 40r are used in step 7 to identify all virtual nodes connected to a selected virtual node. By way of example, virtual nodes B.0, D.0, E.0 are connected to the selected virtual node A.0 by pathway 30a and short cut pathways 40a and 40j, respectively. The identified virtual nodes B.0, D.0, E.0 for the selected virtual node A.0 are then stored in a preliminary communication member list 107 associated with the selected virtual node A.0.

By way of a further example, as can be also seen from Fig. 5, the selected virtual node A.1 is connected to virtual nodes C.0, A.2, B.0 by pathway 30g and short cut pathways 40g and 40p, respectively. The identified virtual nodes C.0, A.2, B.0 for the selected virtual node A.1 are then stored in the preliminary communication member list 107 associated with the selected virtual node A.1.

As can be also seen from Fig. 5, the selected virtual node A.2 is connected to virtual nodes A.0, B.0, B.1 by pathway 30h and short cut pathways 40i and 40r, respectively. The identified virtual nodes A.0, B.0, B.1 for the selected virtual node A.2 are then stored in the preliminary communication member list 107 associated with the selected virtual node A.2.

By way of a further example, selected virtual node E.0 is connected to virtual nodes B.2, A.2, A.1 by pathway 30e and short cut pathways 40e and 40n, respectively. The identified virtual nodes B.2, A.2, A.1 for the selected virtual node E.0 are then stored in the preliminary communication member list 107 associated with the selected virtual node E.0.

By overlaying each of the preliminary communication member lists 107 for each exemplary virtual node A.0, A.1, A.2 a communication member list 108 is created, which contains all communication members of the physical node, i.e. for the physical node A, the communication member list 108 contains the communication members B, C, D, E (Fig. 6). Hence, the communication member list 108 represents communication members within the cluster of vehicles.

In step 8, the step 7 of identifying all virtual nodes for each remaining virtual node of the virtual ring like network is repeated until every communication member is identified for all virtual nodes A.0, A.1, A.2, B.0, B.1, B.2, C.0, D.0, E.0 of the ring like network.

After the step 7 of identifying al virtual nodes for each virtual node A.0, A.1, A.2, B.0, B.1, B.2, C.0, D.0, E.0 is completed, in step 9 the preliminary communication member lists 107 of each virtual node A.0, A.1, A.2, B.0, B.1, B.2, C.0, D.0, E.0 are overlayed or merged to form communication member lists 108 for each physical node A, B, C, D, E. Each communication member list 108 is transferred to the corresponding physical node A, B, C, D, E. It is to be understood, that each communication member list 108 represents the communication members of each vehicle of the cluster.

It is to be noted, that distal end physical nodes C, D, E create a lower number of virtual nodes C.0, D.0, E.0 than branched physical nodes A, B which create virtual nodes A.0, A.1, A.2, B.0, B.1, B.2. The lower number of virtual nodes C.0, D.0, E.0 is a result of the distal end physical nodes C, D, E not being branched. Therefore, the preliminary communication member list 107 of a virtual node C.0, D.0, E.0 created from a distal end physical node C, D, E contains a number of communication members being less than a total number of all communication members of the cluster. Consequently, the communication member list 108 of the physical end nodes C, D, E will also have a lower number of communication members. In order to compensate for the lower number of virtual nodes C.0, D.0, E.0 emerging from distal end physical nodes C, D, E, the difference in the number of communication members may be compensated by adding the same physical node C, D or E as a communication member to stack up the communication member list 108 to the total number of all communication members (Fig. 6). By means of example, in Fig. 6, after merging each of the preliminary communication member lists 107, the communication member list 108 of physical node E comprises only the communication members A and B, because for the selected virtual node E.0 the identified virtual nodes are B.2, A.2, A.1. In order to compensate for the lower number of communication members, the communication member list 108 of physical node E is filled up with E being a self-communicating member of E. The compensation of the lower number of communication members allows for a balanced evaluation during the comparison of the classification results obtained by the evaluation means of a vehicle being a distal end physical node of the chain like communication network.

The communication list 108 provides information which communication members may be connected to obtain the classification results from the vehicles A, B, C, D, E associated with the cluster. In this context, due to the preceding steps, the vehicles 21, 22, 23, 24, 25 are no longer connected in a chain like communication network, but rather in a nearly complete expander graph like communication network, since for each vehicle 21, 22, 23, 24, 25 nearly all communication members are known from each of the corresponding communication member lists 108.

In step 10, the communication member list 108 allows for performing a random walk between uniformly at random chosen physical nodes A, B, C, D, E.

During the random walk classification results of uniformly at random chosen physical nodes A, B, C, D, E are obtained and may be stored in the storage list 104 for comparison. Subsequently, the classification results of the uniformly at random chosen physical nodes A, B, C, D, E are compared at step 11. During the random walk the short-range communication means 101 may be implemented for communication between directly neighboring physical nodes, like for example A and B. The short-range communication means 101 may also be used for communication between non-directly neighboring physical nodes, like A and E, by a hopping communication via physical nodes, such as the physical node B intermediate the non-directly neighboring physical nodes A and E. Additionally or optionally the long-range communication means 105 may be implemented for communication between directly neighboring physical nodes, like A and B, and/or non-directly neighboring nodes, like A and E.

At step 12, the steps 10 and 11 of performing a random walk and comparing the classification results is repeated until a threshold value for a consensus between all classification results is reached. The threshold value for the consensus may be 60 % of full consensus, preferably 80 % of full consensus and ideally 100 % of full consensus. In this context, a time for reaching the threshold value for the consensus between all classification results is shorter than the predetermined clustering time, so that the threshold value for consensus is reached before the cluster is dissolved.

The threshold value for the consensus is obtained iteratively by the following algorithm:
classification results between neighboring physical nodes of the chain like communication network are compared by using a fetcher node asking for the classification result of an exhibitor node neighboring the fetcher node:
if the classification result of the exhibitor node differs from the classification result of the fetcher node, the fetcher node enters into an undecided state,
if the fetcher node is in an undecided state and obtains the classification result from an exhibitor node, not being in an undecided state, the fetcher node incurs the classification result of the exhibitor node,
if the fetcher node and the exhibitor node share the same classification result or if the exhibitor node is in an undecided state, the fetcher node maintains its classification result.

Referring to Fig. 6, by means of example, physical node A may be a fetcher node that asks for the classification result of the exhibitor node E. Furthermore, physical node E may act as a fetcher node for A asking for the classification result from the exhibitor node B. The physical node B again, may act as a fetcher node for A, asking for the classification result from exhibitor node C.

After each classification result has been obtained for each physical node A, B, C, D, E each classification result is compared using the algorithm for reaching consensus.

After the threshold value for the consensus between the classification results of all physical nodes or vehicles is reached, the cluster head vehicle 21 transmits at step 13 the consensus on the classification results to at least one vehicle and/or at least one stationary entity outside the chain like communication network via the long-term communication means 105 of the cluster head vehicle 21.

### Reference numeral list

- 1 to 13: method step

- 21 to 25: vehicle

- 30a to 30i: communication pathway
- 40a to 40r: short cut communication pathway

- 101: short-range communication means
- 102: detection means
- 103: evaluation means
- 104: storage list
- 105: long-range communication means
- 106: antenna
- 107: preliminary communication member list
- 108: communication member list

- A to E: physical node

- A.0: virtual node
- A.1: virtual node
- A.2: virtual node
- B.0: virtual node
- B.1: virtual node
- B.2: virtual node
- C.0: virtual node
- D.0: virtual node
- E.0: virtual node

## Claims

1. Computer implemented method for evaluating traffic incidents using a plurality of vehicles (21, 22, 23, 24, 25),
wherein each vehicle (21, 22, 23, 24, 25) comprises:
- a short-range communication means (101) configured for short-range communication,
- a detection means (102) configured to detect a traffic incident in a surrounding area of the vehicle (21, 22, 23, 24, 25),
- an evaluation means (103) configured to evaluate the detected traffic incident and to classify a result of the evaluation of the detected traffic incident,
- a storage list (104) configured to store the result of the classification and possible further classification results relating to said traffic incident obtained from other vehicles (21, 22, 23, 24, 25) and/or stationary detection means,
the method comprising the steps of:
1) defining a communication range in which at least two vehicles (21, 22, 23, 24, 25) are grouped to form a cluster of vehicles (21, 22, 23, 24, 25),
2) setting up a chain like dynamic mobile ad hoc communication network between the at least two vehicles (21, 22, 23, 24, 25) within the cluster for a predetermined clustering time using the short-range communication means (101), with each vehicle (21, 22, 23, 24, 25) being a physical node (A, B, C, D, E) of the chain like communication network,
3) designating a cluster head vehicle (21) from the vehicles (21, 22, 23, 24, 25) of the chain like communication network, wherein at least the cluster head vehicle (21) further comprises a long-range communication means (105) for long-range communication,
4) identifying all physical nodes (A, B, C, D, E) of the chain like communication network, thereby identifying a number of vehicles (21, 22, 23, 24, 25) as members of the cluster,
5) creating on the basis of all identified physical nodes (A, B, C, D, E) a virtual ring like network comprising virtual nodes (A.0, A.1, A.2, B.0, B.1, B.2, C.0, D.0, E.0), with the virtual nodes (A.0, A.1, A.2, B.0, B.1, B.2, C.0, D.0, E.0) being connected to each other in a closed chain via communication pathways (30a to 30i) and with the virtual nodes (A.0, A.1, A.2, B.0, B.1, B.2, C.0, D.0, E.0) being images of the physical nodes (A, B, C, D, E) of the chain like communication network,
6) creating short cut communication pathways (40a to 40r) between non-neighboring virtual nodes,
7) identifying all virtual nodes (A.0, A.1, A.2, B.0, B.1, B.2, C.0, D.0, E.0) connected to a selected virtual node via the communication pathways (30a to 30i) and the short cut communication pathways (40a to 40r) and storing the identified virtual nodes in a preliminary communication member list (107) associated with the selected virtual node,
8) repeating the step of identifying all virtual nodes (A.0, A.1, A.2, B.0, B.1, B.2, C.0, D.0, E.0) for each remaining virtual node (A.0, A.1, A.2, B.0, B.1, B.2, C.0, D.0, E.0) of the virtual ring like network until every communication member is identified for all virtual nodes (A.0, A.1, A.2, B.0, B.1, B.2, C.0, D.0, E.0) of the ring like network,
9) overlaying the preliminary communication member lists (107) of each virtual node (A.0, A.1, A.2, B.0, B.1, B.2, C.0, D.0, E.0) to form a communication member list (108) and transferring the communication member list (108) to the corresponding physical node (A, B, C, D, E) of the chain like communication network, with the communication member list (108) representing communication members within the cluster of vehicles (21, 22, 23, 24, 25),
10) performing a random walk between uniformly at random chosen physical nodes (A, B, C, D, E) on the basis of the communication member list (108),
11) comparing the classification results of the uniformly at random chosen physical nodes (A, B, C, D, E),
12) repeating the steps of performing a random walk and comparing the classification results until a threshold value for a consensus between all classification results is reached, and
13) the cluster head vehicle (21) transmitting the consensus on classification results to at least one vehicle and/or at least one stationary entity outside the chain like communication network via the long term communication means (105) of the cluster head vehicle (21).

2. The method according to claim 1,
wherein at least one of a common coordinate field, a common traveling direction, a common speed and a detectability range of the detection means (102), in particular the detection means (102) of the cluster head vehicle (21), is used for grouping vehicles (21, 22, 23, 24, 25) to the chain like ad hoc communication network.

3. The method according to claim 1 or 2,
wherein the step of identifying all physical nodes (A, B, C, D, E) comprises creating at least one virtual node (A.0, A.1, A.2, B.0, B.1, B.2, C.0, D.0, E.0) from the physical node (A, B, C, D, E) of the chain like communication network, wherein each virtual node (A.0, A.1, A.2, B.0, B.1, B.2, C.0, D.0, E.0) contains an information on at least each preceding virtual node for at least one virtual node subsequent to a virtual node corresponding to the cluster head vehicle, in particular with the succeeding virtual node being a direct neighbor of its preceding virtual node.

4. The method according to at least one of the preceding claims,
wherein the chain like mobile ad hoc communication network is branched.

5. The method according to claim 4,
wherein the step of identifying all physical nodes (A, B, C, D, E) comprises creating a number of virtual nodes from each physical node (A, B) from which a branch of communication pathways emerges, with the number of virtual nodes (A.0, A.1, A.2, B.0, B.1, B.2) corresponding to the number of branches emerging from the corresponding physical node (A, B) plus one.

6. The method according to at least one of the preceding claims,
wherein the communication member list (108) of a distal end physical node (C, D, E) contains a number of communication members being less than a total number of all communication members of the cluster, wherein the difference in the number of communication members is compensated by adding the same physical as a communication member to stack up the communication member list to the total number of all communication members.

7. The method according to at least one of the preceding claims,
wherein pointer jumping is implemented to create the short cut communication pathway (40a to 40r) between the virtual nodes (A.0, A.1, A.2, B.0, B.1, B.2, C.0, D.0, E.0).

8. The method according to at least one of the preceding claims,
wherein the physical nodes (A, B, C, D, E) are connected in an expander graph like manner after transferring of the communication member list (108) to each physical node (A, B, C, D, E).

9. The method according to at least one of the preceding claims,
wherein the threshold value for the consensus is obtained iteratively by the following algorithm:
classification results between neighboring physical nodes of the chain like communication network are compared by using a fetcher node asking for the classification result of an exhibitor node neighboring the fetcher node:
if the classification result of the exhibitor node differs from the classification result of the fetcher node, the fetcher node enters into an undecided state,
if the fetcher node is in an undecided state and obtains the classification result from an exhibitor node, not being in an undecided state, the fetcher node incurs the classification result of the exhibitor node,
if the fetcher node and the exhibitor node share the same classification result or if the exhibitor node is in an undecided state, the fetcher node maintains its classification result.

10. The method according to at least one of the preceding claims,
wherein a time for reaching the threshold value for the consensus between all classification results is shorter than the predetermined clustering time.

11. The method according to at least one of the preceding claims,
wherein the threshold value for the consensus is 60 % of full consensus, preferably 80 % of full consensus and ideally 100 % of full consensus.

12. The method according to at least one of the preceding claims,
wherein in the step of a random walk between uniformly at random chosen physical nodes (A, B, C, D, E), short-range communication means (101) are implemented for communication between directly neighboring physical nodes or for communication between non-directly neighboring physical nodes by communicating via physical nodes intermediate the non-directly neighboring physical nodes and/or
long-range communication means (105) are implemented for communication between directly neighboring physical nodes and/or non-directly neighboring nodes.

13. System to carry out the computer implemented method of at least one of claims 1 to 12.

14. Non-transitory computer readable medium comprising instructions for carrying out the computer implemented method of at least one of claims 1 to 12.
